# EUROPÄISCHE PATENTANMELDUNG

(11) **EP 1 022 484 A2**
(43) Veröffentlichungstag der Anmeldung: **26.07.2000**
(21) Anmeldenummer: 99122355.3
(22) Anmeldetag: 10.11.1999
(51) Int. Cl.: F16F 13/26

(54) **Umschaltbares Zweikammerstützlager mit hydraulischer Dämpfung**

(30) Priorität: 22.01.1999 DE 19902494
(71) Anmelder: Firma Carl Freudenberg, 69469 Weinheim (DE)
(72) Erfinder: Ticks, Gerd-Heinz, 69483 Michelbach (DE); Diekmann, Hans-Jürgen, 64668 Rimbach (DE)

(57) **Zusammenfassung**

Umschaltbares Zweikammerstützlager (1) mit hydraulischer Dämpfung, insbesondere Motorlager in Kraftfahrzeugen, mit einer Arbeitskammer(3) und einer Ausgleichskammer (4), die durch eine Trennwand (5) voneinander getrennt sind, hydraulisch jedoch über einen Dämpfungskanal (6) und gegebenenfalls weitere Schwingungen dämpfende Einrichtungen miteinander kommunizieren, wobei die Trennwand (5) in ihrer Mitte mit einem über ein Stellglied (8) verschließbaren Durchtrittsöffnung (7) versehen ist und die Außenwand der Ausgleichskammer (4) durch einen elastischen Balg (9) gebildet ist, wobei das Stellglied (8) mit dem elastischen Balg (9) ein integrales Bauteil (10) bildet und durch einen Elektromotor (13) über eine Stellmechanik verstellt wird.

## Beschreibung

### Technisches Gebiet

Die Erfindung betrifft ein umschaltbares Zweikammerstützlager mit hydraulischer Dämpfung insbesondere Motorlager in Kraftfahrzeugen mit einer Arbeitskammer und einer Ausgleichskammer, die durch eine Trennwand voneinander getrennt sind, hydraulisch jedoch über einen Dämpfungskanal und gegebenenfalls weitere Schwingungen dämpfende Einrichtungen miteinander kommunizieren, wobei die Trennwand in ihrer Mitte mit einer über ein Stellglied verschließbaren Durchtrittsöffnung versehen ist, und die Außenwand der Ausgleichskammer durch einen elastischen Balg gebildet ist.

### Stand der Technik

Ein umschaltbares Lager der hier zur behandelnden Art, ist beispielsweise aus der DE-PS 41 41 33s bekannt. Auf die in der genannten Patentschrift dargestellte Wirkungsweise eines solchen Lagers wird bezug genommen. Lager dieser Art haben sich sehr gut bewährt bei der Dämpfung sowohl von tieffrequenten Schwingungen als auch bei hochfrequenten Schwingungen. Wenn die Durchtrittsöffnung in der Trennwand geschlossen ist, werden hochfrequente Schwingungen mit kleinen Amplituden durch die Ausgestaltung der Trennwand und darin angeordneten Membranen gedämpft. Sobald die Durchtrittsöffnung in der Trennwand geöffnet ist, werden niederfrequente Schwingungen gedämpft. Die Durchtrittsöffnung in der Trennwand wird durch einen Kolben verschlossen, der von einer Steuerdruckdose betätigt wird. Die Steuerdruckdose wird pneumatisch betätigt und zwar vorzugsweise mit Unterdruck beaufschlagt, wenn die Durchtrittsöffnung geschlossen werden soll.

In der Automobilindustrie werden Entwicklungen verfolgt, bei denen die bisher verwendeten Unterdruckpumpen jedoch wegfallen, so daß die umschaltbaren Stützlager nicht mehr mit Unterdruckkammern ausgestattet werden können. Es wird folglich nach Lösungen gesucht, bei denen trotz Wegfall der Unterdruckkammer die Umschaltbarkeit des Stützlagers beibehalten werden kann. Dabei soll die Verstellmöglichkeit einfach im Aufbau sein, möglichst wenig Raum einnehmen und eine hohe Robustheit besitzen.

### Darstellung der Erfindung

Die Lösung der gestellten Aufgabe wird bei einem umschaltbaren Zweikammerstützlager mit hydraulischer Dämpfung der eingangs genannten Art erfindungsgemäß dadurch erreicht, daß das Stellglied mit dem elastischen Balg ein integrales Bauteil bildet und durch einen Elektromotor über eine Stellmechanik verstellt wird. Der Elektromotor ist besonders günstig, da alle pneumatischen Zuleitungen zu einer eventuellen Steuerdruckdose wegfallen können. Das gilt gleichermaßen für die Steuerdruckdose selbst. Eine sehr einfache Lösung sieht vor, daß die Stellmechanik eine mit dem Wellenende des Elektromotors verbundene Exzenterscheibe ist. Die Exzenterscheibe greift an dem als Stößel ausgebildeten äußeren Ende des Stellgliedes an. Das Stellglied wird durch die in der Ausgleichskammer befindliche, unter leichten Druck stehende

Fluidmenge mit ihrem Stößel auf die Exzenterscheibe gedrückt. Dadurch wird gewährleistet, daß der Stößel in jeder Betriebsstellung an der Exzenterscheibe anliegt. Um die Reibung zwischen Stößel und Exenterscheibe gering zu halten, kann an deren Kontaktflächen eine Kugel angeordnet sein.

Der die Ausgleichskammer einfassende elastische Balg wird bevorzugt als Rollbalg ausgebildet. In die Mitte dieses Rollbalgs ist das Stellglied eingefügt. Dieses kann dadurch erreicht werden, daß das Stellglied ein eigenes Teil ist, welches mit dem Rollbalg verschweißt wird. Es ist aber auch möglich, den Rollbalg selbst so auszuführen, daß er in der Mitte mit einem nach innen gerichteten Schließkolben und daran anschließenden nach außen gerichteten Stößel versehen ist. Der Rollbalg kann darüber hinaus so ausgestaltet sein, daß er eine nach außen gerichtete Vorspannung hat und allein durch diese Vorspannung schon den Stößel nach außen zu drücken versucht, wodurch der Stößel sicher zur Anlage an der Exzenterscheibe kommt.

Es ist günstig, wenn zwischen Elektromotor und Exzenterscheibe ein Getriebe eingefügt ist. Dieses ermöglicht die Verwendung von Elektromotoren mit höheren Drehzahlen.

Um die Stabilität der Einrichtung zu sichern, ist es günstig, wenn der Elektromotor wenigstens teilweise in einem Gehäuse angeordnet ist, das seinerseits innerhalb eines am Stützlager angebrachten Lagerdeckels plaziert werden kann. Die Verwendung von Kleinstmotoren wird auf diese Weise begünstigt.

In weiterer Ausgestaltung der vorliegenden Erfindung wird das aus dem Gehäuse vorstehende Ende des Elektromotors und/oder die Getriebeummantelung von einem Gleitlager eingefaßt, auf dem die Exzenterscheibe drehbar gelagert ist. Das Gleitlager seinerseits wird am Gehäuse befestigt. Hierdurch wird erreicht, daß die vom Stellglied ausgehenden Kräfte biegemomentfrei auf das Gehäuse übertragen werden. Darüber hinaus wird auch das Wellenende des Getriebes entlastet, was sich sehr kostengünstig auswirkt.

Zur Befestigung der Exzenterscheibe an der Getriebewelle ist die Exzenterscheibe mit einem nabenartigen Teil versehen, das an der Getriebewelle befestigt wird. Exzenterscheibe und nabenartiges Teil bilden eine Einheit.

Um die Exzenterscheibe an einem Verdrehen bei ausgeschaltetem Motor zu hindern, kann sie mit Einkerbungen versehen sein, in die entsprechend ausgebildete Rundungen des Stößels einrasten.

Das gesamte Ensemble von Lagerdeckel, Gehäuse für den Elektromotor, der Elektromotor, das Getriebe und die aufgesetzte Exzenterscheibe werden als Modul hergestellt und mit dem hydraulischen Teil des Hydrolagers verbunden. In Fortführung dieses Gedankens ist es auch möglich Module herzustellen, die an bereits bestehende Hydrolager angefügt werden können, so daß z. B. die oben beschriebene Stelleinrichtung mit der Steuerdruckdose durch das vorliegende Modul ausgetauscht werden kann.

### Ausführung der Erfindung

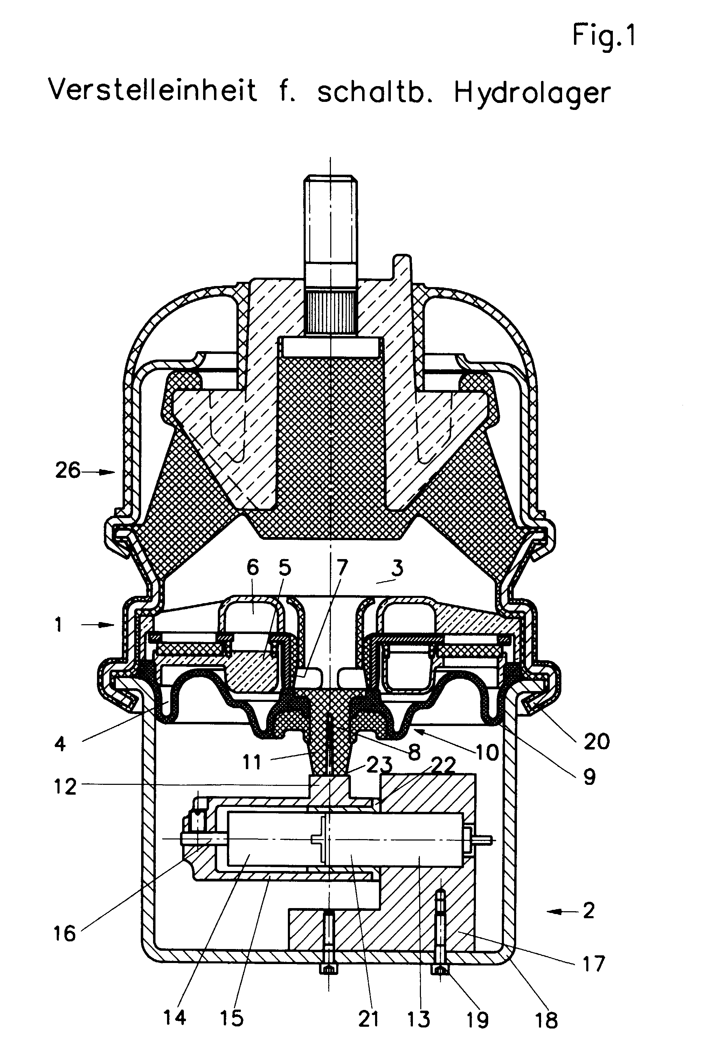

Anhand eines in der Zeichnung dargestellten Ausführungsbeispiels wird die Erfindung näher erläutert.

In der Figur ist ein umschaltbares Zweikammerstützlager 1 mit hydraulischer Dämpfung dargestellt, das mit einem Verstellmodul 2 versehen ist. Der hydraulische Teil 26 des Lagers 1 hat eine Arbeitskammer 3 und die Ausgleichskammer 4. Beide sind durch die Trennwand 5 voneinander getrennt. Arbeitsraum 3 und Ausgleichsraum 4 sind über den Dämpfungskanal 6 miteinander verbunden. In der Mitte der Trennwand 5 befindet sich die Durchtrittsöffnung 7, die durch das Stellglied 8 in der eingezeichneten Lage verschlossen ist. Die Außenwand 9 der Ausgleichskammer 4 ist als Rollbalg 9 ausgebildet. Rollbalg 9 und Stellglied 8 bilden das integrale Bauteil 10. Das Stellglied 8 ist in den Rollbalg 9 eingeklebt oder mit ihr verklemmt und mit dem Stößel 11 versehen. Der Stößel 11 ragt nach außen über den Rollbalg 9 hinaus und liegt an der Exzenterscheibe 12 an. Die Exzenterscheibe 12 bildet eine Stellmechanik, die vom Elektromotor 13 aus verstellt wird. Die Stellmechanik kann direkt mit dem Elektromotor 13 verbunden sein. Im vorliegenden Fall ist jedoch der Elektromotor 13 mit einem Getriebe 14 versehen, an welches die Exzenterscheibe 12 angeschlossen ist. Der Anschluß erfolgt über ein topfartiges Teil 15 am Wellenende 16 des Getriebes 14.

Der Elektromotor 13 ist in das Gehäuse 17 eingefügt und darin drehfest angeordnet. Das Gehäuse 17 selbst ist am Lagerdeckel 18 durch die Verschraubung 19 fixiert. Der Lagerdeckel 18 ist am hydraulischen Teil 26 des Stützlagers 1 angebracht. Im vorliegenden Beispiel durch Umbördeln der Ränder 20 des hydraulischen Teils 26. Hier kann jedoch auch eine andere Verbindung gewählt werden.

Elektromotor 13 und Getriebe 14 sind in ihren äußeren Abmessungen gleich und direkt miteinander gekoppelt. Auf dem hervorstehenden Ende 21 des Elektromotors 13 ist ein Gleitlager 22 aufgesetzt, auf dem die Exzenterscheibe 12 drehbar gelagert ist. Das Gleitlager 22 ist am Gehäuse 17 befestigt und erstreckt sich teilweise auch über die Getriebeummantelung des Getriebes 14.

Auf der Exzenterscheibe 12 sind die Einkerbungen 23 angebracht, in welche das Ende des Stößels 11 leicht einrastet. Bei ausgeschaltetem Motor wird so der Stößel 11 sicher in seiner vorgegebenen Lage gehalten.

Im gezeigten Ausführungsbeispiel schließt das Stellglied 8 die Öffnung 7 ab.

## Patentansprüche

1. Umschaltbares Zweikammerstützlager mit hydraulischer Dämpfung, insbesondere Motorlager in Kraftfahrzeugen, mit einer Arbeitskammer und einer Ausgleichskammer, die durch eine Trennwand voneinander getrennt sind, hydraulisch jedoch über einen Dämpfungskanal und gegebenenfalls weitere Schwingungen dämpfende Einrichtungen miteinander kommunizieren, wobei die Trennwand in ihrer Mitte mit einer über ein Stellglied verschließbaren Durchtrittsöffnung versehen ist und die Außenwand der Ausgleichskammer durch einen elastischen Balg gebildet ist, **dadurch gekennzeichnet,** daß das Stellglied (8) mit dem elastischen Balg (9) ein integrales Bauteil (10) bildet und durch einen Elektromotor (13) über eine Stellmechanik verstellt wird.

2. Stützlager nach Anspruch 1, dadurch gekennzeichnet, daß die Stellmechanik eine mit dem Wellenende des Elektromotors (13) verbundene Exzenterscheibe (12) ist.

3. Stützlager nach Anspruch 1 oder 2, dadurch gekennzeichnet, daß das Stellglied (8) mit einem vorstehenden Stößel (11) versehen ist.

4. Stützlager nach einem der Ansprüche 1 bis 3, dadurch gekennzeichnet, daß der elastische Balg (9) eine Vorspannkraft auf das Stellglied (8) in Richtung auf die Exzenterscheibe (12) ausübt.

5. Stützlager nach einem der Ansprüche 1 bis 4, dadurch gekennzeichnet, daß an der Kontaktfläche zwischen Stößel (11) und Exenterscheibe (12) eine Kugel angeordnet ist.

6. Stützlager nach einem der Ansprüche 1 bis 5, dadurch gekennzeichnet, daß zwischen Elektromotor (13) und Exzenterscheibe (12) ein Getriebe (14) eingefügt ist.

7. Stützlager nach einem der Ansprüche 1 bis 6, dadurch gekennzeichnet, daß der Elektromotor (13) wenigstens teilweise in einem Gehäuse (17) angeordnet ist, das innerhalb eines hydraulischen Teils des Stützlagers (1) angebrachten Lagerdeckels (18) plaziert ist.

8. Stützlager nach einem der Ansprüche 1 bis 7, dadurch gekennzeichnet, daß das aus dem Gehäuse (18) hervorstehende Ende (21) des Elektromotors (13) und/oder die Getriebeummantelung von einem Gleitlager (22) eingefaßt ist/sind, auf dem die Exzenterscheibe (12) drehbar gelagert ist.

9. Stützlager nach einem der Ansprüche 1 bis 8, dadurch gekennzeichnet, daß alles zur Verstellung des Stellglieds (8) erforderlichen Teile, wie Elektromotor (13, Gehäuse (17), Getriebe (14), Exzenterscheibe (12) und Lagerdeckel (18) zu einem vorgefertigten Modul zusammengefaßt sind.
